# EUROPEAN PATENT APPLICATION

(11) **EP 2 065 596 A1**
(43) Date of publication of application: **03.06.2009**
(21) Application number: 07076032.7
(22) Date of filing: 29.11.2007
(51) Int. Cl.: F03G 7/08, H02K 7/18

(54) **System for generating electricity from kinetic energy**

(71) Applicant: Smits, Cornelis, 3721 PB Bilthoven (NL)
(72) Inventor: Smits, Cornelis, 3721 PB Bilthoven (NL)
(74) Representative: Volmer, Johannes Cornelis

(57) **Abstract**

The invention relates to a system (10) for generating electricity from kinetic energy suitable for use in roads, highways, railways, runways and the like. The system comprises a frame (40), a surface section (26) for supporting passing traffic which is moveable in a vertical direction between an upper rest position and a lower drive position under the influence of the weight of traffic passing by, the surface section (26) being supported by counter pressure means for moving the surface section from the lower drive position to the upper rest position, a movement transformation member (37) for conversion of the downwardly directed movement of the surface section (26) into a rotational action of a driving axis (38) of a electric generator (24), wherein the counter pressure means comprise at least one gas spring (70).

## Description

The invention relates to a system for generating electricity from kinetic energy suitable for use in roads, highways, railways, runways and the like. Such a system is designed to generate electricity from passing traffic by transforming the weight applied by said traffic into a vertical movement, which in its turn is transformed into a rotational movement, which can be used for generating electricity in a generator, dynamo or any other suitable electricity generating device.

Systems for generating electricity from kinetic energy of traffic are known in the art. At least two different systems are recognized, one in which wind generated by passing traffic is used to drive a wind turbine. In a second type the weight of passing traffic is translated into a rotational movement, which can be used for generating electricity. The invention relates to the second type of systems.

E.g. GB 1332202 discloses a device for extracting energy form moving vehicles and converting it into electrical energy, capable of being put to a useful purpose. This known device comprises an inclined ramp which projects from a surface over which vehicles run, so that a part of a vehicle, in movement, becomes operative to depress the ramp by running over it. This depression is transformed in some way to rotate a dynamo or actuate some other form of electrical generator, to produce a useful output of electric current. In an embodiment thereof a top of a rod provided with a toothed rack on one side is depressed by traffic running on a slope, beneath which the rod is arranged. Via pinion(s), one way clutch coupling, other wheels including a flywheel the depression of the rod is transformed into a driving action of a dynamo or the like. Once the traffic has passed, the slope is moved back to its original position by the rod due to a spring acting on a plunger.

Similarly DE 4142492 has disclosed a system for conversion of kinetic energy into electrical energy, wherein two ramps are inclinedly arranged leaving clear a small gap at the ends facing each other. The ramps are supported by a spring loaded guide. At one end a link assembly is synchronously connected to the bottom of the ramps, while the other end is coupled eccentrically to a disc driving an axis of a electricity generator.

Furthermore US 2003/0034652 discloses an electrical generating device, wherein the potential energy of moving traffic on highways is used to generate three phase electrical current. This known device comprises a plurality of compressible electrical generator pumps underneath upper and lower plates located between the road bed and the travel surface of the highway activated by the compression weight of a moving vehicle over the travel surface of the highway. In an embodiment means of generating electrical current are provided, comprising a piston cylinder arrangement, wherein the cylinder (base piston shell) and the piston (upper piston cap) are compressibly connected by a spring.

One drawback of these known arrangements is that the movements of the ramps or otherwise inclined road surfaces in downward and upward direction as a result of a passing vehicle is non-uniformly due to the springs used. Therefore the forces experienced by the system are not uniform but vary significantly, thereby having the risk of premature wear and undesired shocks experienced by drivers and passengers of vehicles passing by. Wear would require blocking the road in order to provide access to the system, which is a nuisance to the traffic and would provide inadequate use of the device because during service and maintenance the device would be out of order.

The present invention aims at providing an apparatus for electricity generation, wherein the drawbacks mentioned above are reduced or eliminated.

According to the invention a system for generating electricity from kinetic energy suitable for use in roads, highways, railways, runways and the like, is provided, the system comprising a frame, a surface section for supporting passing traffic which surface section is moveable in a vertical direction between an upper rest position and a lower drive position under the influence of the weight of traffic passing by, the surface section being supported by counter pressure means for moving the surface section from the lower drive position to the upper rest position, a movement transformation member for conversion of a downwardly directed movement of the surface section into a rotational action of a driving axis of a electric generator, wherein the counter pressure means comprise at least one gas spring.

The system according to the invention is intended to be used in roads and highways, in particular where heavy traffic is present, preferably almost during the whole day in view of continuous generation of electricity. Principally, the system according to the invention is also applicable to railways and runways in order to generate electricity from passing trains and aeroplanes respectively.

The system according to the invention comprises a surface section over which wheels can roll. This surface section is arranged such that it is moved downwardly upon the weight of e.g. a passing vehicle from a rest position (position occupied by the surface section when no downwardly directed load is present) to a driving position (position occupied by the surface section when a load is applied). Usually the rest position of the surface section would be arranged a small distance e.g. a few centimetres such as about 10 centimetres above the level of the road surface, while in the driving position the surface section would be essentially flush with the adjacent road surface. Thus there is a height difference between these two positions. The downward movement of the surface section is used by a movement transformation member to drive a driving axis of a dynamo or similar device for generating electricity. Typically this electricity generating device would be situated in the verge of the road. Upon removal of the weight of passing traffic the counter pressure means redirect the surface section from its driving position to the rest position. According to the invention the counter pressure means comprise at least one gas spring. The use of a gas spring allows a swift positioning of the surface section in the rest position from the drive position and vice versa, while the movement in the forward and backward stroke of the gas spring is rather smooth and constant over the whole length of the stroke due to the gas spring characteristics. Furthermore it is easy to adjust the speed of movement by suitable selection of the pressure of the pneumatic medium (typically nitrogen). A damping action in the upward and/or downward direction of the movement of the gas spring may also be present, if a damp gas spring is used. This is particularly advantageous when in the driving position the surface section is supported by supporting frame parts. The impact between the surface section and the supporting frame parts is reduced when using a damp gas spring.

Thus the life span of the system according to the invention is high because little damage and wear occur.

Preferably the action of the gas spring is adjusted, such that the full stroke is performed above a predetermined minimum limit of the force exerted by passing traffic. In other words the gas spring moves over the full length from the rest position to the drive position, when a vehicle having a predetermined weight drives over the surface section.

Advantageously the system would have a modular construction having a size adapted to the width of one traffic lane. A module of a modular system is provided with connectors for coupling the axes of adjacent modules together.

In a preferred embodiment the movement transformation member comprises a direct drive of the driving axis of the electric generator. By direct coupling to the driving axis loss of energy by friction and the like in intermediate transfer equipment is reduced, thereby improving the yield and efficiency of the system.

Advantageously the movement transformation member comprises a flywheel, which allows to continue the rotational drive of the drive axis of the electricity generating device for a while, even if no traffic is acting or is at rest on the surface section.

The movement transformation member may comprise a vertically arranged toothed rack mounted to the bottom of the surface section and a pinion matching the toothed rack, which pinion is mounted on a driving axis of the system according to the invention, e.g. a driving axis connectable to the driving axis of the electrical generator.

In a further preferred embodiment thereof the movement transformation member comprises a guiding member mounted to the bottom of the surface section and provided with a vertically extending chain part fixedly connected thereto and a toothed wheel associated with the chain part, which is mounted with a one way clutch on an axis that is rotationally supported in the frame and is connectable to the axis of the electricity generator. It has been found that the preferred direct drive combination comprising a chain part or section and matching pinion offers less play, is more reliable and can be exchanged more rapidly if necessary. Advantageously this guide member slidingly engages a second guiding member mounted to the frame. More preferably the guide member has a bridge shape wherein the chain part is provided at the inner side of one leg, while the outer sides of both legs slidingly engage the second guiding member. The spaced apart legs provide a space wherein the toothed wheel is situated. This bridge construction provides a stable construction for transferring the vertical movement of the surface section to the driving axis, while torsion is low. Preferably a gas spring is provided in the neighbourhood of each leg.

In a preferred embodiment the surface section comprises a longitudinal central part to be arranged transverse to the driving direction of the traffic and a front part and rear part both hingedly connected to the longitudinal central part and having an opposite inclination. The front and rear part function as ramps. When a vehicle drives on the front part the central part to the bottom of which the movement transformation member and counter pressure means are mounted, starts to move down thanks to the hinge connection, thereby flattening the surface section. A similar action in opposite upward direction starts, when a vehicle leaves the surface section.

Preferably the free ends of the front and rear parts are slidingly arranged in a slit provided in the frame. The downward movement of the surface section requires that the free ends of the front and rear part are able to move somewhat in a direction opposite to the driving direction and the driving direction respectively. In this preferred embodiments these free ends slide in a slit, which reduces the risk of causing impact damage thereto. The free ends may be supported by rollers to contribute to the ease of sliding.

In a further preferred embodiment of the invention the system may be moveably arranged for example using guide members like rails in a recess, in particular for movement to the roadside.

The invention will be illustrated in more detail by means of the attached drawing, wherein:
Fig. 1 is a diagrammatical view of an embodiment of a system according to the invention.
Fig. 2 is a front view of an embodiment of a system according to the invention;
Fig. 3 is a view from above of the embodiment shown in fig. 2;
Fig. 4 is a side view of the embodiment shown in fig. 2;
Fig. 5 is a view from above of an embodiment of a surface section of the system according to the invention; and
Fig. 6 is a side view of the embodiment shown in fig. 5.

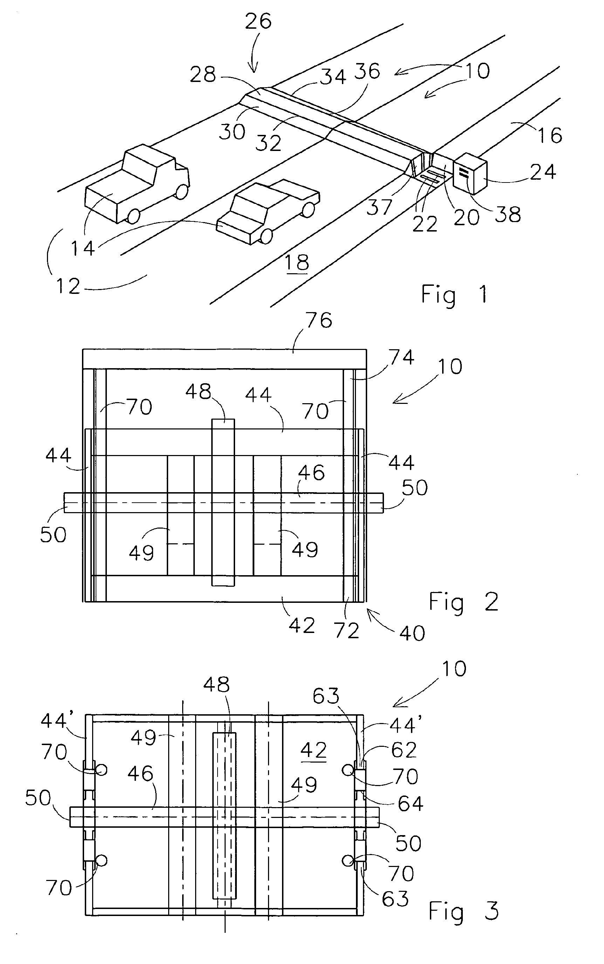

Fig 1 show a schematic view of a system according to the invention, generally indicated by reference numeral 10. In the situation shown several system units 10 are positioned in a side-by-side arrangement over the full width of two traffic lanes 12 having traffic 14 in a first driving direction. In the shoulder 16 the surface 18 is opened, exposing a trough 20 provided with a guiding means 22 such as rails. The guiding means 22 extend in a direction traverse to the driving direction, allowing a unit 10 provided with wheels (not shown) to roll to the side of the road for maintenance or service activities. During such activities a temporary cover plate may be positioned over the hole in the road surface in order to allow traffic circulation. In the neighbourhood of the shoulder 16 an electricity generator 24 is mounted. A surface section 26 of a unit 10 situated in the rest position comprises a longitudinal central part 28 extending over the width of one traffic lane 12, thus in a direction perpendicular to the driving direction. A front part 30 is hingedly fixed to a first upper longitudinal corner 32 of the central part 28. A rear part 34 is hingedly fixed to a second upper longitudinal corner 36 opposite to corner 32. When a vehicle 14 drives over the surface section 26 it will move downwardly due to the weight of the vehicle 14. This vertical movement in downward direction is transformed by a movement transformation member 37 into a rotational movement of the driving axis 38 of generator 24. Details of the construction of a unit 10 can be derived from figs. 2-6.

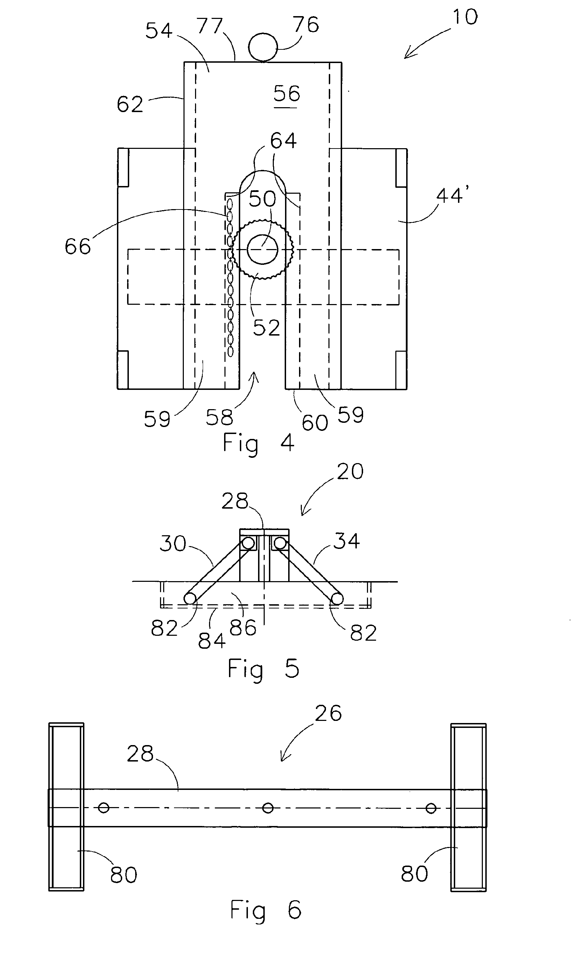

Fig. 2-4 show an embodiment of a system unit 10 according to the invention, except for the surface section which is illustrated in figs. 5-6. A trough-like frame 40 has a bottom 42 and upstanding walls 44. End walls 44' rotationally support an axis 46 in suitable bearings. In the centre a flywheel 48 is mounted on the axis. In this case additional supports 49 are provided at both sides of the flywheel 48 for further supporting the axis 46 and flywheel 48. Near both ends 50 of the axis 46 pinions 52 (fig. 4) provided with a one way clutch are mounted on the axis 46. In the embodiment shown the transformation member 37 comprises a first guiding member 54. The guiding member 54 comprises a longitudinal plate 56 having a slit 58 bounded by legs 59 in a lower head end 60. The slit 58 has a length greater than the height of the axis 46 from the bottom 42. As can be derived from fig. 3, the longitudinal side outer edges 62 of the plate 56 and the inner edges 64 of the legs 59 are recessed. In one of the recessed inner edges 64 of the legs a chain section 66 is fixedly mounted, during use cooperating with pinion 52 for driving the axis 46 upon movement of the guiding member 54 in a vertically downward direction. Figs. 2 and 4 show the guiding member 54 in a lower driving position. When the guiding member 54 moves upwards, due to the presence of the one way clutch and the flywheel the axis 46 continues to rotate and drive the generator 24. In the recessed outer edges 62 smaller edges 63 of the frame 40 are contained allowing a sliding movement of the guiding member 54 with respect to the frame 40. Vertically arranged gas springs 70 are provided in the vicinity of each leg 59. A bottom end 72 of the gas spring 70 is fixedly mounted on bottom 42, while a top end 74 is mounted to the underside of a cross beam 76 connecting the left-hand and right-hand guiding member 54 at their top head ends 77. The cross-beam 76 carries the central part 28 of the surface section 26 (not shown in figs 2-4). The ends 50 of axis 46 extend beyond the end walls of frame 50. Axes 46 of two adjacent units 10 can be easily connected, so that each unit 10 is able to drive the same generator 24.

Fig. 5 and fig. 6 show an embodiment of a surface section 26 comprising a longitudinal central part 28. In this case a front part 30 comprises beams 80 hinged at the respective ends of central part 28. A plate (not shown) as a road surface is carried by the beams 80. As can be seen in fig. 6 the lower ends 82 of the beams 80 are supported by a supporting surface 84 of frame 40, such that the lower ends 82 can move e.g. slide or roll over the supporting surface 84 in a direction opposite to the driving direction. A rear part 34 is similarly constructed. The supporting surface 84 is provided as bottom part of a slit 86 in the frame 40.

## Claims

1. System (10) for generating electricity from kinetic energy suitable for use in roads, highways, railways, runways and the like, the system comprising a frame (40), a surface section (26) for supporting passing traffic which is moveable in a vertical direction between an upper rest position and a lower drive position under the influence of the weight of traffic passing by, the surface section (26) being supported by counter pressure means for moving the surface section from the lower drive position to the upper rest position, a movement transformation member (37) for conversion of the downwardly directed movement of the surface section (26) into a rotational action of a driving axis (38) of a electric generator (24), wherein the counter pressure means comprise at least one gas spring (70).

2. System according to claim 1, wherein the movement transformation member (37) comprises a direct drive of the driving axis of the electric generator (24).

3. System according to one of the preceding claims, wherein the movement transformation member (37) comprises an axis (46) connectable to the driving axis (38) of generator (24), which axis (46) is preferably provided with a flywheel (48).

4. System according to one of the preceding claims, wherein the movement transformation member (37) comprises a guiding member (54) mounted to the bottom of the surface section (26) and provided with a vertically extending chain part (66) fixedly connected thereto and a toothed wheel (52) associated with the chain part (66) and mounted with a one way clutch on an axis (46) rotationally supported in the frame (40) and connectable to the driving axis (38) of the electricity generator (24).

5. System according to claim 4, wherein the guiding member (54) slidingly engages a second guiding member (63) mounted to the frame (40).

6. System according to claim 5, wherein a gas spring (70) is mounted near the second guiding member (63).

7. System according to one of the preceding claims, wherein the surface section (26) comprises a longitudinal central part (28) to be arranged transverse to the driving direction of the traffic and a front part (30) and rear part (34) both hingedly connected to the longitudinal central part (28) and having an opposite inclination.

8. System according to one of the preceding claims, wherein the front and rear parts (30,34) have a free end (82) moveably arranged in a slit (86) of the frame (40).
